(19) Europäisches Patentamt
European Patent Office
Office européen des brevets

(11) **EP 2 236 786 B1**

(12) **EUROPEAN PATENT SPECIFICATION**

(45) Date of publication and mention
of the grant of the patent:
**13.03.2013  Bulletin 2013/11**

(51) Int Cl.:
*F01N 9/00* (2006.01)   *F01N 13/00* (2010.01)
*G01N 15/06* (2006.01)

(21) Application number: **09014753.9**

(22) Date of filing: **26.11.2009**

(54) **Particulate matter concentration measuring apparatus**

Vorrichtung zur Konzentrationsmessung von Partikeln

Appareil de mesure de concentration de particules

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **31.03.2009  PCT/JP2009/056747**

(43) Date of publication of application:
**06.10.2010  Bulletin 2010/40**

(73) Proprietors:
• **Ibiden Co., Ltd.
Ogaki-shi, Gifu 503-8604 (JP)**
• **Konstandopoulos, Athanasios G.
54352 Thessaloniki (GR)**

(72) Inventors:
• **Konstandopoulos, Athanasios G.
Thessaloniki 54352 (GR)**
• **Miyata, Fumishige
Ibi-gun
Gifu 501-0695 (JP)**
• **Kasuga, Takafumi
Ibi-gun
Gifu 501-0695 (JP)**

(74) Representative: **HOFFMANN EITLE
Patent- und Rechtsanwälte
Arabellastrasse 4
81925 München (DE)**

(56) References cited:
**EP-A1- 1 914 399    JP-A- 60 242 341**

**Description**

BACKGROUND OF THE INVENTION

1. Field of the Invention

The present invention generally relates to technologies for purifying internal combustion engine exhaust gas. In particular, the present invention relates to an apparatus for measuring the concentration of particulate matter (PM) in diesel engine exhaust gas.

2. Description of the Related Art

FIG. 1 depicts a diesel engine exhaust gas purifying apparatus 20 disclosed in EP1916394 A1 ("Patent Document 1"). The diesel engine exhaust gas purifying apparatus 20 includes a particulate matter concentration measuring apparatus 20PM (PM sensor) for detecting the concentration of particulate matter (PM) in diesel engine exhaust gas, which mainly consists of carbon (C).

The particulate matter concentration measuring apparatus 20PM includes an auxiliary exhaust line 21A branching from an exhaust line 21; a particulate matter detection filter 22A disposed in the auxiliary exhaust line 21A; and a differential pressure measuring unit 22B for measuring a differential pressure produced between an inlet and an outlet of the particulate matter detection filter 22A. The auxiliary exhaust line 21A is provided with a flow rate measuring unit 24 and a temperature measuring unit T1. The particulate matter detection filter 22A is provided with a heater 22H. A flow rate in the auxiliary exhaust line 21A is controlled by a valve 23.

In the particulate matter concentration measuring apparatus 20PM disclosed in Patent Document 1, a differential pressure $\Delta P$ between the inlet and outlet of the particulate matter detection filter 22A, a temperature T of an exhaust gas in the auxiliary exhaust line 21A, and a flow rate Q2 of the exhaust gas in the auxiliary exhaust line 21A are measured. Based on the differential pressure $\Delta P$, the exhaust gas temperature T, and the exhaust gas flow rate Q2, a mass PM (g/h) of the particulate matter that is captured by the particulate matter detection filter 22A per unit time is calculated. Then, a concentration $PM_{conc}$ (g/m$^3$) of the particulate matter in the exhaust gas is calculated from the mass PM (g/h) of the particulate matter.

If a large amount of the particulate matter accumulates in the particulate matter detection filter 22A, the accuracy of detection of the differential pressure decreases. Thus, the measurement of particulate matter according to Patent Document 1 burns the accumulated particulate matter whenever a certain amount of the particulate matter has accumulated in the particulate matter detection filter 22A, using the heater 22H.

The exhaust gas purifying apparatus 20PM of Patent Document 1 also includes a particulate matter capturing filter (DPF: diesel particulate filter) 22 made of a porous ceramic and provided in the exhaust line 21. The auxiliary exhaust line 21A is connected upstream of the particulate matter capturing filter (DPF) 22 along a flow of the exhaust gas. Based on the concentration $PM_{conc}$ (g/m$^3$) of the particulate matter in the exhaust gas, an engine operating status, and/or a flow rate Q1 of gas that flows into the particulate matter capturing filter (DPF) 22 in the exhaust line 21, a mass $PM_{enter\ full\ filter}$ (g/h) of the particulate matter that flows into the particulate matter capturing filter (DPF) 22 is calculated.

In the particulate matter capturing filter (DPF) 22, the particulate matter that is captured accumulates gradually, as in the particulate matter detection filter 22A. If a resultant deposit of the particulate matter in the particulate matter capturing filter (DPF) 22 is left unremoved, excessive pressure may be produced by the exhaust gas, resulting in deterioration in gas mileage or damaging the engine. Thus, in the exhaust gas purifying apparatus using the particulate matter capturing filter (DPF) 22, the particulate matter that has accumulated is removed by periodically burning it within the particulate matter capturing filter (DPF) 22, thereby regenerating the particulate matter capturing filter (DPF) 22. Specifically, a high-temperature exhaust gas is caused to flow into the particulate matter capturing filter (DPF) 22 to burn the accumulated particulate matter.

According to the aforementioned Patent Document 1, whether the amount of particulate matter that is actually captured by the particulate matter capturing filter (DPF) 22 exceeds a regeneration threshold value can be accurately determined by determining the mass $PM_{enter\ full\ filter}$ (g/h) of the particulate matter captured by the particulate matter capturing filter (DPF) 22.

However, in the conventional particulate matter concentration measuring apparatus 20PM, when the particulate matter in the particulate matter detection filter 22A is burned, a high-temperature gas flows into the differential pressure measuring unit 22B, potentially disabling the measurement of differential pressure. Further, the high-temperature exhaust gas that flows from the diesel engine towards the particulate matter capturing filter (DPF) 22 may enter the auxiliary exhaust line 21A and further into the differential pressure measuring unit 22B.

EP 1 914 399 A1 describes an exhaust gas purifying apparatus comprising a primary diesel particulate filter provided in an exhaust line of a diesel engine, a secondary exhaust line branched from the exhaust line from an upstream side of the primary diesel particulate filter, a secondary diesel particulate filter provided in the secondary exhaust line, the secondary diesel particulate filter having a soot storage capacity smaller than the soot storage capacity of the primary diesel particulate filter and a differential pressure measuring part measuring a differential pressure between an inlet and an outlet of the secondary diesel particulate filter.

SUMMARY OF THE INVENTION

It is a general object of the present invention to provide a particulate matter concentration measuring apparatus in which one or more of the aforementioned problems of the related art are eliminated.

A more specific object of the present invention is to provide a particulate matter concentration measuring apparatus having improved resistance against a high-temperature exhaust gas that may flow into the particulate matter concentration measuring apparatus.

According to the present invention, a particulate matter concentration measuring apparatus for measuring a concentration of a particulate matter in an exhaust gas that flows through a diesel engine exhaust line includes an exhaust gas collecting line branched off from the diesel engine exhaust line, having a smaller flow path cross-sectional area than a flow path cross-sectional area of the diesel engine exhaust line; a particulate matter detection filter disposed in the exhaust gas collecting line; and a differential pressure detecting unit configured to detect a differential pressure produced between an inlet and an outlet of the particulate matter detection filter.

The differential pressure detecting unit is provided apart from a downstream end of the particulate matter detection filter in a direction of a flow of the exhaust gas.

Thus, in accordance with the present invention, the differential pressure detecting unit is provided apart from the downstream end of the particulate matter detection filter by 10 cm or more. This prevents the melting of the differential pressure detecting unit or a damage to it by its temperature exceeding its heat resistance when the particulate matter accumulated in the particulate matter detection filter is eliminated by burning, or a high-temperature gas exceeding 600°C flows through the exhaust line when regenerating the particulate matter detection filter. Thus, a normal operation of the particulate matter concentration measuring apparatus can be maintained.

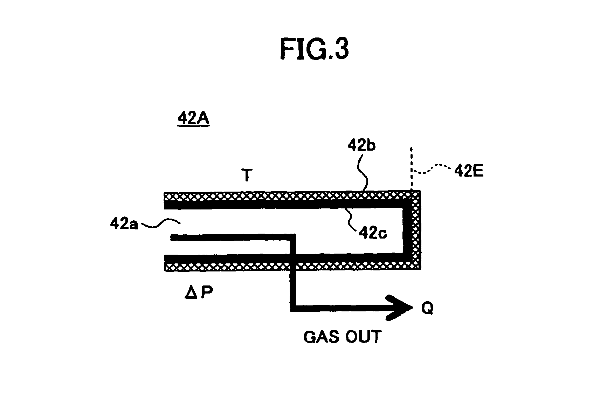

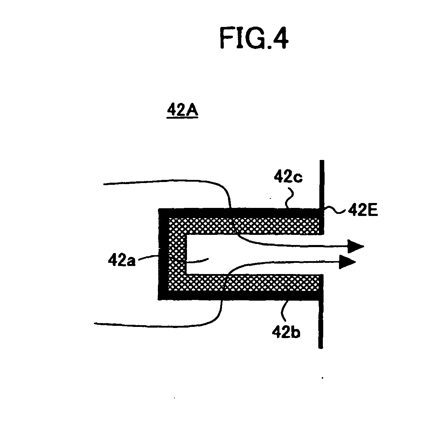

In accordance with the present invention, the "downstream end of the particulate matter detection filter" refers to a location the most downstream of the particulate matter detection filter where the particulate matter accumulates (see FIG. 3 or 4).

In the present invention, the differential pressure detecting unit is provided 10 cm or more, more preferably 30 cm or more, apart from the downstream end of the particulate matter detection filter.

In this way, the differential pressure detecting unit can be prevented from being exposed to the high-temperature gas, thereby enabling a normal operation of the apparatus.

BRIEF DESCRIPTION OF THE DRAWINGS

Other objects, features and advantages of the present invention will become apparent upon consideration of the specification and the appendant drawings, in which:

FIG. 1 depicts a configuration of a conventional exhaust gas purifying apparatus;
FIG. 2 depicts an exhaust gas purifying apparatus including a particulate matter concentration measuring apparatus according to First Embodiment of the present invention;
FIG. 3 illustrates an operation of a particulate matter detection filter in the particulate matter concentration measuring apparatus of First Embodiment;
FIG. 4 illustrates an operation of a variation of the particulate matter detection filter in the particulate matter concentration measuring apparatus of First Embodiment;
FIG. 5 depicts a concentration of the particulate matter concentration measuring apparatus of First Embodiment in detail;
FIG. 6 is a graph plotting the distance D from a downstream end of the particulate matter detection filter in the particulate matter concentration measuring apparatus of First Embodiment against the exhaust gas temperature;
FIG. 7 is a graph plotting the distance D from the downstream end of the particulate matter detection filter in the particulate matter concentration measuring apparatus of First Embodiment against the measurement error;
FIG. 8 depicts a configuration for measuring a true value of the amount of particulate matter during the measurement of FIG. 7;
FIG. 9 depicts a whole example of the particulate matter concentration measuring apparatus according to First Embodiment;
FIG. 10 depicts a variation of the particulate matter concentration measuring apparatus according to First Embodiment;

FIG. 11 depicts a configuration of an exhaust gas purifying apparatus including a particulate matter concentration measuring apparatus according to Second Embodiment; and

FIG. 12 depicts a configuration of a variation of the particulate matter detection filter according to First Embodiment.

## DETAILED DESCRIPTION OF THE PREFERRED EMBODIMENTS

Referring now to the drawings, wherein like reference numerals designate identical or corresponding parts throughout the several views, embodiments of the present invention are described with reference to the drawings.

## First Embodiment

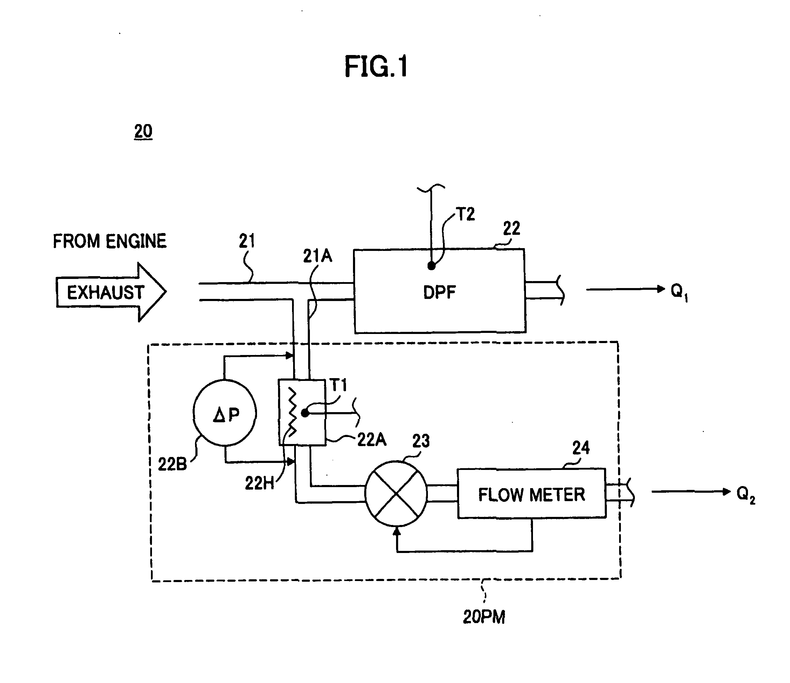

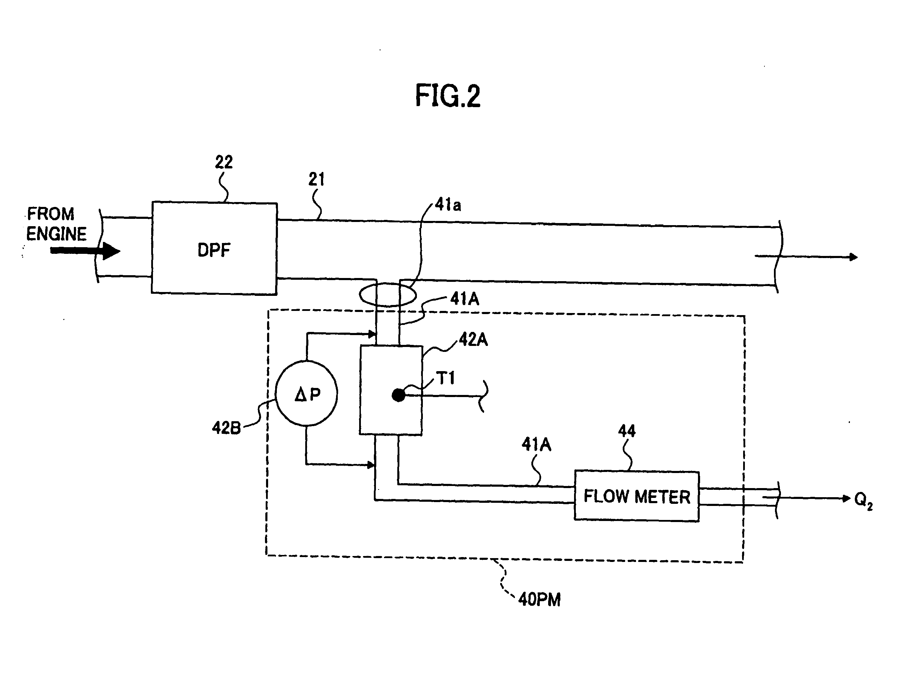

FIG. 2 depicts a diesel engine exhaust gas purifying apparatus including a particulate matter concentration measuring apparatus 40PM (PM sensor) according to a first embodiment of the present invention. In FIG. 2, units or components similar to those of the apparatus depicted in FIG. 1 are designated with similar reference numerals or signs and their description is omitted. The particulate matter concentration measuring apparatus 40PM of FIG. 2 may be used to detect the leakage of an amount of particulate matter exceeding a threshold value downstream of a particulate matter capturing filter (DPF) 22 through an exhaust line 21 due to an abnormality in the particulate matter capturing filter (DPF) 22. Upon detection of such leakage, an alarm may be issued via a buzzer, a lamp, or the like.

As depicted in FIG. 2, in a diesel engine exhaust line 21 provided with a particulate matter capturing filter (DPF) 22, an exhaust gas collecting line 41A is connected to the exhaust line 21 downstream of the particulate matter capturing filter (DPF) 22 via an exhaust gas collecting portion 41a. In the exhaust gas collecting line 41A, a particulate matter detection filter 42A depicted in FIG. 3 and a flow rate measuring unit 44 for measuring a flow rate Q2 in the exhaust gas collecting line 41A are connected in series.

A downstream end of the exhaust gas collecting line 41A is connected to a unit having a lower pressure than the pressure at the inlet of the particulate matter detection filter 42A, such as a negative pressure tank or an air intake unit, which are not shown. Such a lower-pressure unit functions effectively as a suction pump connected to the downstream side of the exhaust gas collecting line 41A. Accordingly, the exhaust gas in the exhaust line 21 can be sucked and reliably supplied to the particulate matter detection filter 42A.

The particulate matter detection filter 42A includes a temperature measuring unit T1 for measuring a temperature of the particulate matter detection filter 42A. A differential pressure measuring unit 42B is also provided to measure a differential pressure $\Delta P$ across the particulate matter detection filter 42A. A cross-sectional area of the flow path of the exhaust gas collecting portion 41a is smaller than that of the exhaust line 21.

The differential pressure measuring unit 42B may use a known pressure gauge of various kinds, such as a diaphragm type, a bellows type, or a thermal type. The flow rate measuring unit 44 may use various known flow rate meters, such as a hot-wire flow rate meter or a Venturi flow rate meter.

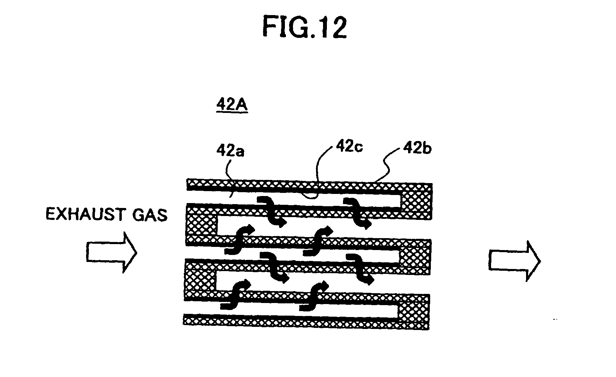

FIG. 3 depicts an example of the particulate matter detection filter 42A. In this example, a single cell 42b is formed within the particulate matter detection filter 42A. In another example, plural cells 42b may be formed in the particulate matter detection filter 42A, as depicted in FIG. 12. The particulate matter detection filter 42A may use a plate-shaped filter. Each cell 42b, which may be made of a porous ceramic, includes a gas passage 42a of which one end may be open and the other end may be closed.

According to the present invention, the particulate matter detection filter 42A includes one or more gas passages 42a which may have, as a whole, a volume of 5% or less (e.g., 0.05% to 5%) of a total volume of exhaust gas passages in the particulate matter capturing filter (DPF) 22. For example, the one or more gas passages 42a have a total volume of 65 ml or less (e.g., 0.05 ml to 65 ml), and a filtering area of 0.1 $cm^2$ to 1000 $cm^2$ (preferably between 1 $cm^2$ and 10 $cm^2$). The one or more gas passages 42a may have a rectangular cross section, with one end thereof closed (in FIG. 3, the rear of the passage is closed).

With reference to FIG. 3, the exhaust gas introduced into the gas passage 42a passes through a cell wall of the porous ceramic and may move into an adjacent gas passage. At this time, the particulate matter is captured on an internal wall surface of the cell 42b, forming a particulate matter layer 42c.

FIG. 4 depicts a variation of the cell 42b depicted in FIG. 3. In the cell 42b of FIG. 4, the exhaust gas flows from the outside of the cell 42b through the cell wall into the gas passage 42a inside the cell 42b. In this case, a deposit of the particulate matter layer 42c is formed on the external walls of the cell 42b. In the aforementioned filter depicted in FIG. 12, the cells depicted in FIGs. 3 and 4 are alternately adjacently formed.

Although similar cells are formed in the particulate matter capturing filter (DPF) 22 described with reference to FIG. 1, the gas passage 42a and the cell 42b of the particulate matter detection filter 42A do not necessarily need to have the same size or cross sectional shape as the gas passages in the particulate matter capturing filter (DPF) 22. The gas passage 42a and the cell 42b may have any desired cross-sectional shape, such as a circular, square, octagonal, or elliptical shape.

The material of the porous ceramic of the particulate matter detection filter 42A (cell 42b) may be different from the porous ceramic of the particulate matter capturing filter (DPF) 22. The material of the particulate matter detection filter 42A (cell 42b) may not even be ceramic. The gas passages 42a may have a total volume of 5% or less of the total volume of the exhaust gas passages in the particulate matter capturing filter (DPF) 22, or a volume of 65 ml or less, and a filtering area of 0.1 to 1000 $cm^2$ (preferably 1 to 10 $cm^2$). In this way, a uniform deposit of the particulate matter layer 42c can be formed on the cell 42b. As a result, the amount of particulate matter deposition in the particulate matter detection filter 42A can be simply and accurately measured, as described below.

In the particulate matter concentration measuring apparatus 40PM depicted in FIG. 2, the accumulated amount of the particulate matter captured in the particulate matter detection filter 42A is calculated by the following equation:

$$\Delta P = \frac{\mu Q}{2V_{trap}}(\alpha + W_s)^2 \left[ \frac{W_s}{K_w \alpha} + \frac{1}{2K_{SOOT}} \ln\left(\frac{\alpha}{\alpha - 2W}\right) + \frac{4FL^2}{3}\left(\frac{1}{(\alpha - 2W)^4} + \frac{1}{\alpha^4}\right)\right]$$
$$+ \frac{\rho Q^2(\alpha + Ws)^4}{V_{trap}^2}\left[\frac{\beta Ws}{4} + 2\zeta\left[\frac{L}{\alpha}\right]^2\right]$$

(Equation 1)

where "$\Delta P$" is a differential pressure expressed in (Pa) unit; "$\mu$" is a dynamic coefficient of viscosity expressed in (Pa·s) unit; "Q" is an exhaust gas flow rate expressed in ($m^3$/s) unit; "$\alpha$" is a length of one side of the cell expressed in (m) unit; "$\rho$" is an exhaust gas density expressed in (g/$m^3$) unit; "$V_{trap}$" is a filter volume expressed in ($m^3$) unit; "Ws" is a wall thickness expressed in (m) unit; "Kw" is a gas permeability of a wall expressed in ($m^{-1}$) unit; "$K_{soot}$" is a gas permeability of a captured particulate matter layer expressed in ($m^{-1}$) unit; "W" is a thickness of the captured particulate matter layer expressed in (m) unit; "F" is a coefficient (=28.454); "L" is an effective filter length expressed in (m) unit; "$\beta$" is the Forchheimer coefficient of the porous wall expressed in ($m^{-1}$) unit; and "$\zeta$" is a differential pressure due to a pass through the filter expressed in (Pa) unit.

The mass "$m_{soot}$" of the particulate matter captured in the particulate matter detection filter 42A (cell 41b) is expressed by the following equation:

$$W = \frac{\alpha - \sqrt{\alpha^2 - \dfrac{m_{soot}}{N_{cells} \times L \times \rho_{soot}}}}{2}$$

(Equation 2)

where "$m_{soot}$" is a mass (g) of the captured particulate matter; "$N_{cells}$" is a numerical aperture of an inlet-side cell; and "$\rho_{soot}$" is a density of the captured particulate matter.

By dividing "$m_{soot}$" by the time (s) elapsed since the previous regeneration of the particulate matter detection filter 42A, a mass "PM" (g/s) that is captured per unit time can be obtained.

Once the mass "PM" (g/s) of the particulate matter that is deposited per unit time is determined, the particulate matter concentration "$PM_{conc}$" (g/$m^3$) in the exhaust gas can be determined by the following equation:

$$PM(g/s) = PM_{conc}(g/m^3) \times Q2(m^3/s)$$

(Equation 3)

where "Q2" is an exhaust gas flow rate ($m^3$/s) through the particulate matter detection filter 42A.

As depicted in FIG. 2, in accordance with the first embodiment, the particulate matter concentration measuring apparatus 40PM is disposed downstream of the particulate matter capturing filter (DPF) 22. Thus, the leakage of the particulate matter exceeding a threshold downstream of the particulate matter capturing filter (DPF) 22 through the exhaust line 21 due to an abnormality in the particulate matter capturing filter (DPF) 22 can be immediately detected, and an alarm can be issued via a buzzer, a lamp, and the like.

In a diesel engine system including the exhaust gas purifying apparatus depicted in FIG. 2, the particulate matter that is deposited in the particulate matter capturing filter (DPF) 22 is removed by burning, using a high-temperature exhaust gas, as mentioned above. Generally, combustion of the particulate matter produces a large quantity of high-temperature gas at temperatures of equal to or more than 600°C to 700°C, and some of the gas may flow into the exhaust gas collecting line 41A. Also, when the particulate matter that accumulated in the particulate matter detection filter 42A is removed by burning with a heater, a high-temperature exhaust gas passes through the exhaust gas collecting line 41A. Consequently, a thin film in the diaphragm pressure gauge or a distortion sensor used as the differential pressure measuring unit 42B may be damaged or their operation may be rendered inaccurate by the heat of the high-temperature exhaust gas, thus adversely affecting the result of measurement of particulate matter concentration.

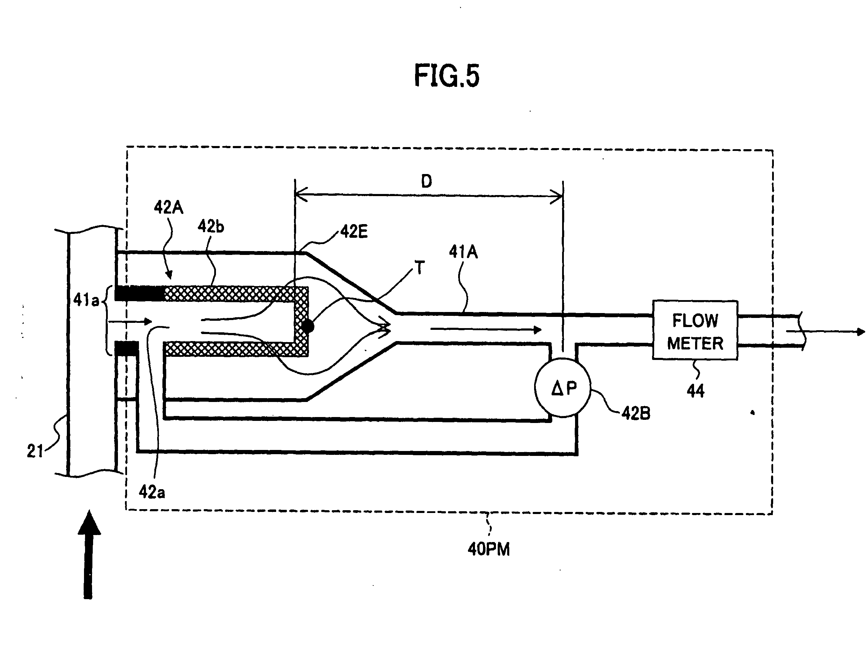

Thus, in accordance with the first embodiment, the differential pressure measuring unit 42B is provided downstream of the flow of exhaust gas and spaced apart from the end of the particulate matter detection filter 42A by a distance D, as depicted in FIG. 5. With reference to FIG. 5, the particulate matter detection filter 42A is housed within a housing 42E continuous with the exhaust gas collecting line 41A. One end of the particulate matter detection filter 42A forms an exhaust gas collecting portion 41a. The differential pressure measuring unit 42B, which may constitute a diaphragm pressure gauge, is provided at the distance D from an internal wall surface of the downstream-side end of the particulate matter detection filter 42A.

One end of the differential pressure measuring unit 42B is connected to an upstream portion of the particulate matter detection filter 42A. The other end of the differential pressure measuring unit 42B is connected to the exhaust gas collecting line 41A downstream of the particulate matter detection filter 42A. Thus, the differential pressure measuring unit 42B can measure the differential pressure between the inlet and outlet of the cell 42b of the particulate matter detection filter 42A.

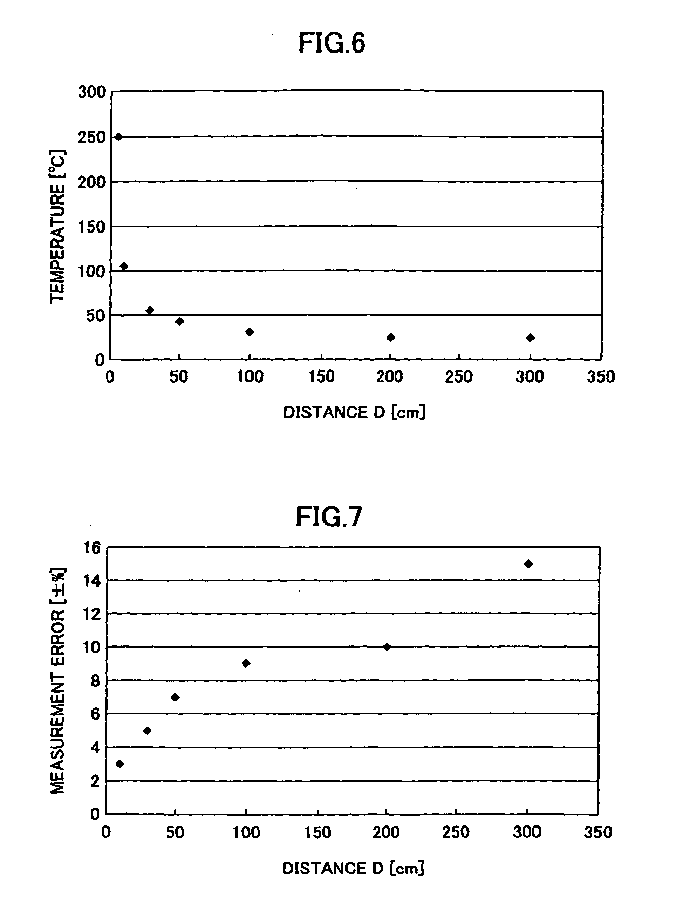

FIG. 6 is a graph plotting the distance D from the downstream end of the particulate matter detection filter against the exhaust gas temperature. In an experiment, 10 g/L of particulate matter was deposited in the particulate matter detection filter 42A of the particulate matter concentration measuring apparatus 40PM depicted in FIG. 2, and the deposit of the particulate matter was combusted by heating the particulate matter detection filter 42A to a temperature of 650°C with the heater. The temperature of the differential pressure measuring unit 42B is plotted against the distance D in a graph of FIG. 6.

With reference to FIG. 6, the temperature of the differential pressure detecting unit 42B exceeds about 120°C when the distance D is less than 10 cm. It can be seen from this result that, when the heat resistance of the pressure gauge in the differential pressure measuring unit 42B is about 120°C or less, the distance D should be at least 10 cm in order to prevent damage to the pressure gauge.

As seen from FIG. 6, the greater the distance D of the differential pressure measuring unit 42B from the end of the particulate matter detection filter 42A, the lower the temperature of the exhaust gas. However, if the distance D is excessive, a measurement error in the measured differential pressure increases. At the same time, in order to obtain an accurate differential pressure measurement, the distance D should be minimized.

Table 1 below and FIG. 7 show results of determining a measurement error in the particulate matter concentration measuring apparatus 40PM for various values of the distance D. With reference to Table 1, the measurement error indicates a discrepancy of a particulate matter concentration calculated by Equations 1 to 3 from an actual measurement value ("true value", as will be described later) of the particulate matter in the exhaust line 21 in the configuration of FIG. 2.

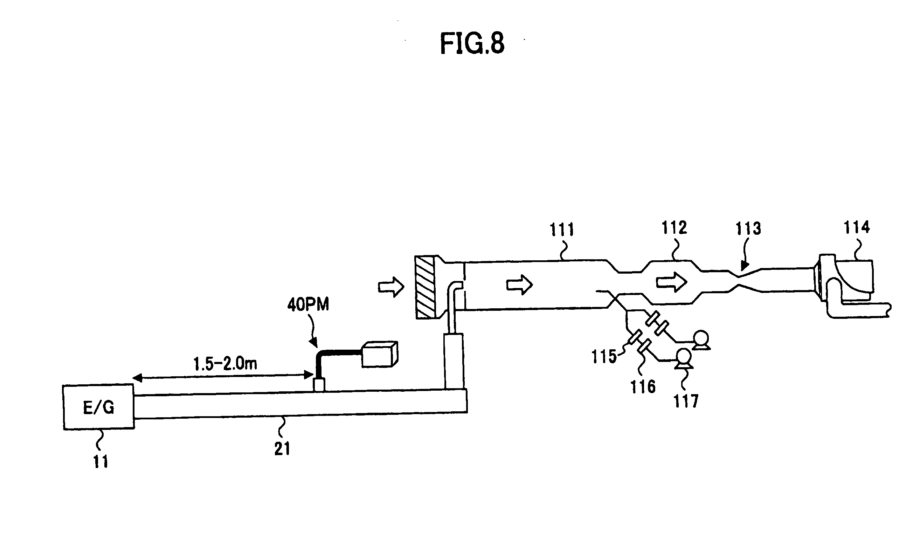

The true value is determined using a system depicted in FIG. 8. Specifically, an exhaust gas discharged by the diesel engine 11 into the exhaust line 21 is guided to a dilution tunnel 111 into which pure air is introduced. In the dilution tunnel 111, the exhaust gas is diluted and cooled down to temperatures of 52°C or less. The exhaust gas is then collected on a primary capturing filter 115 and a secondary capturing filter 116, and the mass of the captured exhaust gas is measured with a micro balance. The amount of particulate matter in the exhaust gas is thus directly measured, and the measured value is converted into a concentration in the exhaust line 21, thus obtaining the true value.

By comparing the true value with the value ($PM_{conc}$) calculated from the values measured by the particulate matter concentration measuring apparatus 40PM (distance between engine (E/G) and particulate matter concentration measuring apparatus 40PM is 1.5 through 2.0 m) connected to the same exhaust line 21, the measurement error in Table 1 is determined.

In the configuration depicted in FIG. 8, the exhaust gas, after passing through the dilution tunnel 111, is sucked by a blower 114 via a heat exchanger 112 and a critical flow Venturi tube 113. A second blower 117 is also provided downstream of the primary capturing filter 115 and the secondary capturing filter 116 to suck the exhaust gas.

Table 1

| | Distance (D) (cm) | Temperature (°C) at differential pressure measuring unit | Measurement error (±%) |
|---|---|---|---|
| Ex. 1 | 10 | 105 | 3 |
| Ex. 2 | 30 | 55 | 5 |
| Ex. 3 | 50 | 43 | 7 |
| Ex. 4 | 100 | 32 | 9 |
| Ex. 5 | 200 | 25 | 10 |
| Comp. Ex. 1 | 5 | 250 | Melted |
| Comp. Ex. 2 | 300 | 25 | 15 |

With reference to Table 1 and FIG. 7, in Examples 1 through 5 where the distance D is 10 cm to 200 cm, the measurement error is ±10% or less. In Comparative Example 1 where the distance D is 5 cm, the diaphragm pressure gauge of the differential pressure measuring unit 42B is damaged by melting. It is also seen that when the distance D exceeds 200 cm, the measurement error of the particulate matter concentration measuring apparatus 40PM exceeds ±10%.

Thus, in the particulate matter concentration measuring apparatus 40PM according to the first embodiment, the distance D is preferably 10 cm or more and 200 cm or less and more preferably 10 cm or more and 50 cm or less, when the heat resistance of the differential pressure measuring unit 42B is up to 120°C.

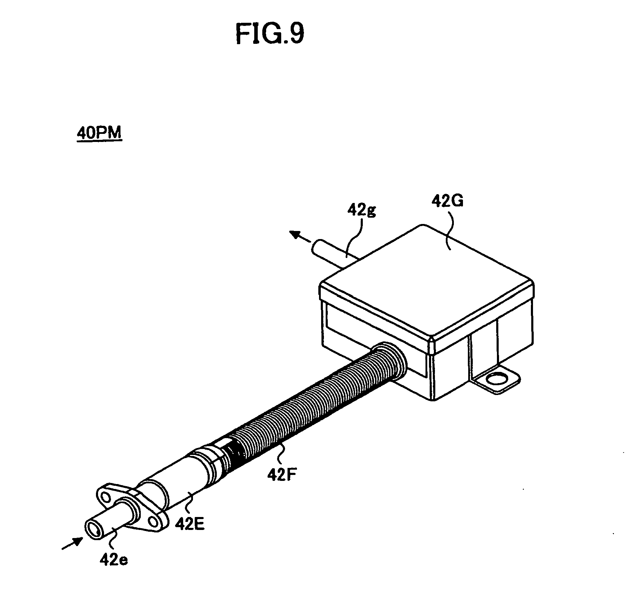

FIG. 9 depicts an example of the particulate matter concentration measuring apparatus 40PM that is configured to be inserted into the exhaust line 21 of FIG. 2 downstream of the particulate matter capturing filter (DPF) 22. In this example, the particulate matter concentration measuring apparatus 40PM includes a pipe-shaped housing 42E having a fixing head portion 42e, a flexible hose 42F, and a control unit 42G.

The flexible hose 42F connects the housing 42E and the control unit 42G, which is located downstream of the gas flow. The control unit 42G houses the differential pressure measuring unit 42B and the flow rate measuring unit 44. The exhaust gas that has passed through the control unit 42G is discharged via an exhaust pipe 42g. The housing 42E, which may be made of a heat-resistant metal, such as stainless steel, houses the particulate matter detection filter 42A, which is preferably made of a porous ceramic, such as SiC. The fixing head portion 42e forms a part of the exhaust gas collecting line 41A connected to the exhaust line 21. In this example, the size of the particulate matter concentration measuring apparatus 40PM can be reduced, allowing the particulate matter concentration measuring apparatus 40PM to be installed at a desired location of an automobile as needed, for example.

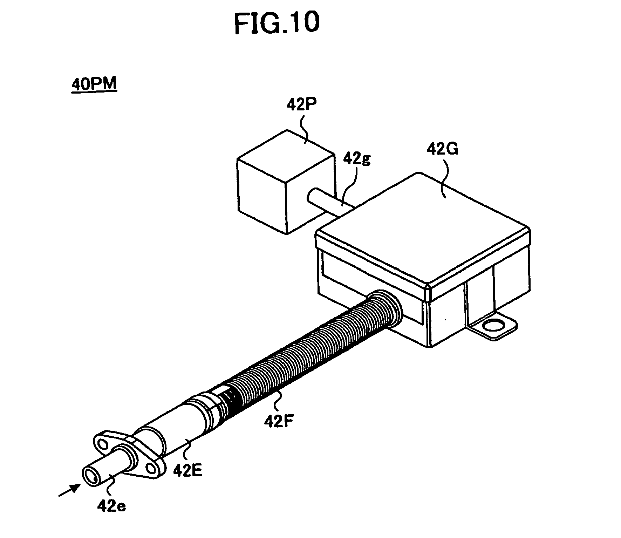

FIG. 10 depicts a variation of the particulate matter concentration measuring apparatus 40PM of FIG. 9. In this example, a pump 42P is connected to the exhaust pipe 42g in order to compulsively discharge the exhaust gas from the control unit 42G. In this configuration, when the fixing head portion 42e is provided within a stationary exhaust gas atmosphere that is not flowing, the exhaust gas can be sucked by a negative pressure produced by the pump 42P, thus enabling the measurement of particulate matter concentration.

Preferably, in the exhaust gas collecting line 41A, a heat-radiation structure is provided between the end of the particulate matter detection filter 42A downstream of the exhaust gas flow and the differential pressure detecting unit 42B. The heat-radiation structure makes the entry of the high-temperature gas into the differential pressure detecting unit more difficult, thereby eliminating the need to use heat-resistant components. In addition, the distance between the particulate matter detection filter and the differential pressure detecting unit can be reduced.

Second Embodiment

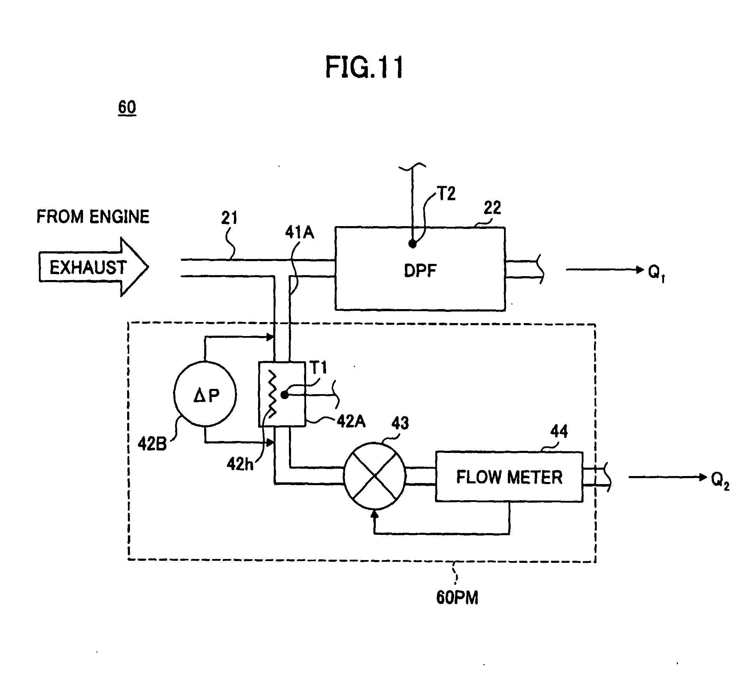

FIG. 11 depicts a diesel engine exhaust gas purifying apparatus 60 including a particulate matter concentration measuring apparatus 60PM (PM sensor) according to the second embodiment of the present invention.

The diesel engine exhaust gas purifying apparatus 60 is similar in configuration to the diesel engine exhaust gas purifying apparatus 20 depicted in FIG. 1. With reference to FIG. 11, an exhaust gas collecting line 41A branches from the exhaust line 21 upstream of the particulate matter capturing filter (DPF) 22. In FIG. 11, units or components similar to those of the foregoing embodiment are designated with similar reference numerals or signs and their description is omitted.

In the configuration of FIG. 11, the exhaust gas that has yet to pass through the particulate matter capturing filter (DPF) 22 is captured by the particulate matter detection filter 42A. Based on the amount of the captured particulate matter, the following process is performed, in addition to the processes according to the foregoing Equations (1) through (3).

Namely, because the particulate matter concentration "$PM_{conc}$" in the exhaust gas is the same whether in the exhaust gas collecting line 41A or in the exhaust line 21, the amount of the particulate matter "$PM_{enter\ full\ filter}$" (g/h) that passes through the exhaust line 21 can be determined by the following expression:

$$PM_{enter\ full\ filter}\ (g/h) = PM_{conc}(g/m^3) \times Q1(m^3/h)$$

$$(Equation\ 4)$$

where "Q1" is an exhaust gas flow rate in the exhaust line 21.

In this way, the amount of the particulate matter that accumulates in the particulate matter capturing filter (DPF) 22 can be estimated. "Q1", which is the flow rate of the exhaust gas that passes through the particulate matter capturing filter (DPF) 22, may be determined by actual measurement or estimated from an operation status of the engine.

In the configuration of FIG. 11, there is further provided a valve 43 in the exhaust gas collecting line 41A. The valve 43 is controlled by the flow rate measuring unit 44, as in the case of the particulate matter concentration measuring apparatus 20PM of FIG. 1, in order to control the exhaust gas flow rate in the exhaust gas collecting line 41A to a predetermined value "Q2".

Because a deposit of the particulate matter collects in the particulate matter detection filter 42A over time, the particulate matter detection filter 42A needs to be regenerated. For this purpose, a heater 42h is installed over the particulate matter detection filter 42A (cell 42b). The heater 42h is activated by power supplied via a drive line (not shown) in order to combust the particulate matter captured in the cell 42b, which mainly consists of carbon "C", thereby regenerating the particulate matter detection filter 42A as needed.

In Second Embodiment also, similar advantageous effects to those of First Embodiment can be obtained.

While the present disclosure describes two embodiments, these embodiments are to be understood as illustrative and do not limit the claim scope. Many variations, modifications, additions and improvements of the described embodiments are possible within the scope of the appended claims. For example, those having ordinary skill in the art will readily appreciate that the flow rate measuring unit in the embodiments of the present invention may be omitted if the flow rate in the exhaust gas collecting line is known in advance.

The temperature measuring unit may be similarly omitted when the property of the exhaust gas may be considered to be constant.

The heater in Second Embodiment of the present invention may be dispensed with if there is no need for the regeneration process. The valve may be eliminated if the flow rate can be accurately measured. In another embodiment, the heater of Second Embodiment may be provided in the particulate matter concentration measuring apparatus according to First Embodiment.

In accordance with the present invention, heat resistance to the inflow of high-temperature exhaust gas into a particulate matter concentration measuring apparatus is improved.

## Claims

1. A particulate matter concentration measuring apparatus (40PM, 60PM) for measuring a concentration of a particulate matter in an exhaust gas that flows through a diesel engine exhaust line (21), the apparatus comprising:

   an exhaust gas collecting line (41A) branched off from the diesel engine exhaust line (21), having a smaller flow path cross-sectional area than a flow path cross-sectional area of the diesel engine exhaust line (21);
   a particulate matter detection filter (42A) provided in the exhaust gas collecting line (41A); and
   a differential pressure detecting unit (42B) configured to detect a differential pressure (ΔP) produced between an inlet and an outlet of the particulate matter detection filter (42A),
   wherein the differential pressure detecting unit (42B) is provided apart from a downstream end of the particulate matter detection filter (42A) in a direction of a flow of the exhaust gas,
   **characterized in that**
   the differential pressure detecting unit (42B) is spaced apart from the downstream end of the particulate matter detection filter (42A) by 10 cm or more.

2. The particulate matter concentration measuring apparatus (40PM, 60PM) according to claim 1, wherein the differential pressure detecting unit (42B) is spaced apart from the downstream end of the particulate matter detection filter (42A) by 200 cm or less.

3. The particulate matter concentration measuring apparatus (40PM, 60PM) according to claim 2, wherein the differential pressure detecting unit (42B) is spaced apart from the downstream end of the particulate matter detection filter (42A) by 50 cm or less.

4. The particulate matter concentration measuring apparatus (40PM, 60PM) according to any one of claims 1 through 3, wherein the differential pressure detecting unit (42B) includes a material having a heat resistance of 120°C or less that is used as a pressure detecting material.

5. The particulate matter concentration measuring apparatus (40PM, 60PM) according to any one of claims 1 through 3, comprising a heat-radiation structure disposed in the exhaust gas collecting line (41A) between the downstream end of the particulate matter detection filter (42A) and the differential pressure detecting unit (42B).

6. The particulate matter concentration measuring apparatus (40PM, 60PM) according to any one of claims 1 through 5, comprising a flow rate measuring unit (44) provided in the exhaust gas collecting line (41A) and configured to measure an exhaust gas flow rate in the exhaust gas collecting line (41A) .

7. The particulate matter concentration measuring apparatus (40PM, 60PM) according to claim 6, comprising:

a flow rate control valve (43) provided in the exhaust gas collecting line (41A) and configured to control the exhaust gas flow rate (Q1) in the exhaust gas collecting line (41A);
a control unit configured to control the flow rate control valve based on the exhaust gas flow rate (Q1) measured by the flow rate measuring unit (44), in order to control the exhaust gas flow rate (Q1) in the exhaust gas collecting line (41A) to a predetermined value.

8. The particulate matter concentration measuring apparatus (40PM, 60PM) according to any one of claims 1 through 7, wherein a downstream end of the exhaust gas collecting line (41A) is connected to a negative pressure unit.

9. The particulate matter concentration measuring apparatus (40PM, 60PM) according to any one of claims 1 through 6, comprising a pump (42P) disposed downstream of the particulate matter detection filter (42A) in the direction of the flow of the exhaust gas.

10. The particulate matter concentration measuring apparatus (40PM, 60PM) according to any one of claims 1 through 9, wherein the particulate matter detection filter (42A) has a filter volume smaller than a filter volume of a particulate matter capturing filter (22) disposed in the diesel engine exhaust line (21).

11. The particulate matter concentration measuring apparatus (40PM, 60PM) according to any one of claims 1 through 10, wherein the exhaust gas collecting line (41A) is connected to the diesel engine exhaust line (21) downstream of the particulate matter capturing filter (22).

12. The particulate matter concentration measuring apparatus (40PM, 60PM) according to any one of claims 1 through 10, wherein the exhaust gas collecting line (41A) is connected to the diesel engine exhaust line (21) upstream of the particulate matter capturing filter (22).

**Patentansprüche**

1. Partikelkonzentrationsmessvorrichtung (40PM, 60PM) zum Messen einer Konzentration von Partikeln in einem Abgas, welches durch eine Dieselmotorabgasleitung (21) fließt, wobei die Vorrichtung aufweist:

eine Abgassammelleitung (41A), die von der Dieselmotorabgasleitung (21) abzweigt, mit einer kleineren Strömungsbahnquerschnittsfläche als eine Strömungsbahnquerschnittsfläche der Dieselmotorabgasleitung (21) ;
einen Partikelerfassungsfilter (42A), der in der Abgassammelleitung (41A) vorgesehen ist; und
eine Differenzdruckerfassungeinheit (42B), die ausgebildet ist, um einen Differenzdruck ($\Delta$P), der zwischen einem Eingang und einem Ausgang des Partikelerfassungsfilters (42A) erzeugt wird, zu erfassen,
wobei die Differenzdruckerfassungeinheit (42B) entfernt von einem Flussabwärtsende des Partikelerfassungsfilters (42A) in einer Strömungsrichtung des Abgases vorgesehen ist,
**dadurch gekennzeichnet, dass**
die Differenzdruckerfassungseinheit (42B) von dem Flussabwärtsende des Partikelerfassungsfilters (42A) um 10 cm oder mehr beabstandet ist.

**2.** Partikelkonzentrationsmessvorrichtung (40PM, 60PM) nach Anspruch 1, bei der die Differenzdruckerfassungseinheit (42B) von dem Flussabwärtsende des Partikelerfassungsfilters (42A) um 200 cm oder weniger beabstandet ist.

**3.** Partikelkonzentrationsmessvorrichtung nach Anspruch 2, bei der die Differenzdruckerfassungseinheit (42B) von dem Flussabwärtsende des Partikelerfassungsfilters (42A) um 50 cm oder weniger beabstandet ist.

**4.** Partikelkonzentrationsmessvorrichtung nach einem der Ansprüche 1 bis 3, bei der die Differenzdruckerfassungseinheit (42B) ein Material aufweist mit einer Wärmefestigkeit von 120°C oder weniger, welches als ein Druckerfassungsmaterial verwendet wird.

**5.** Partikelkonzentrationsmessvorrichtung nach einem der Ansprüche 1 bis 3, aufweisend eine Wärmeabstrahlungsstruktur, die in der Abgassammelleitung (41A) zwischen dem Flussabwärtsende des Partikelerfassungsfilters (42A) und der Differenzdruckerfassungseinheit (42B) angeordnet ist.

**6.** Partikelkonzentrationsmessvorrichtung nach einem der Ansprüche 1 bis 5, aufweisend eine Durchflussmengenmesseinheit (44), die in der Abgassammelleitung (41A) vorgesehen ist und ausgebildet ist, um eine Abgasdurchflussmenge in der Abgassammelleitung (41A) zu messen.

**7.** Partikelkonzentrationsmessvorrichtung nach Anspruch 6, aufweisend:

ein Durchflusssteuerventil (43), das in der Abgassammelleitung (41A) vorgesehen ist und ausgebildet ist, um die Abgasdurchflussmenge (Q1) in der Abgassammelleitung (41A) zu steuern; eine Steuerungseinheit, die ausgebildet ist, um das Durchflusssteuerventil basierend auf der Abgasdurchflussmenge (Q1), die von der Durchflussmesseinheit (44) gemessen wurde, zu steuern, um die Abgasdurchflussmenge (Q1) in der Abgassammelleitung (41A) auf einen vorgegebenen Wert zu regeln.

**8.** Partikelkonzentrationsmessvorrichtung nach einem der Ansprüche 1 bis 7, bei der ein Flussabwärtsende der Abgassammelleitung (41A) mit einer negativen Druckeinheit verbunden ist.

**9.** Partikelkonzentrationsmessvorrichtung nach einem der Ansprüche 1 bis 6, aufweisend eine Pumpe (42P), die flussabwärts des Partikelerfassungsfilters (42A) in der Strömungsrichtung des Abgases angeordnet ist.

**10.** Partikelkonzentrationsmessvorrichtung nach einem der Ansprüche 1 bis 9, bei der der Partikelerfassungsfilter (42A) ein Filtervolumen aufweist, welches kleiner ist als ein Filtervolumen eines Partikelaufnehmfilters (22), der in der Dieselmotorabgasleitung (21) angeordnet ist.

**11.** Partikelkonzentrationsmessvorrichtung nach einem der Ansprüche 1 bis 10, bei der die Abgassammelleitung (41A) mit der Dieselmotorabgasleitung (21) flussabwärts des Partikelaufnehmfilters (22) verbunden ist.

**12.** Partikelkonzentrationsmessvorrichtung nach einem der Ansprüche 1 bis 10, bei der die Abgassammelleitung mit der Dieselabgasleitung (21) flussabwärts des Partikelaufnehmfilters (22) verbunden ist.

**Revendications**

**1.** Appareil de mesure d'une concentration en matières particulaires (40PM, 60PM) destiné à mesurer une concentration en matières particulaires dans des gaz d'échappement qui circulent à travers une conduite d'échappement d'un moteur diesel (21), l'appareil comprenant :

une conduite de collecte des gaz d'échappement (41A) branchée sur la conduite d'échappement du moteur diesel (21), qui présente une section de chemin d'écoulement plus petite que celle du chemin d'écoulement de la conduite d'échappement du moteur diesel (21) ;
un filtre de détection de matières particulaires (42A) disposé dans la conduite de collecte des gaz d'échappement (41A) ; et
une unité de détection de pression différentielle (42B) configurée de façon à détecter une pression différentielle (ΔP) produite entre une entrée et une sortie du filtre de détection de matières particulaires (42A) ;

dans lequel l'unité de détection de pression différentielle (42B) est disposée à l'écart d'une extrémité aval du filtre de détection de matières particulaires (42A) dans la direction de l'écoulement des gaz d'échappement ; **caractérisé en ce que** :

l'unité de détection de pression différentielle (42B) est éloignée de l'extrémité aval du filtre de détection de matières particulaires (42A) de 10 cm ou plus.

2. Appareil de mesure d'une concentration en matières particulaires (40PM, 60PM) selon la revendication 1, dans lequel l'unité de détection de pression différentielle (42B) est éloignée de l'extrémité aval du filtre de détection de matières particulaires (42A) de 200 cm ou moins.

3. Appareil de mesure d'une concentration en matières particulaires (40PM, 60PM) selon la revendication 2, dans lequel l'unité de détection de pression différentielle (42B) est éloignée de l'extrémité aval du filtre de détection de matières particulaires (42A) de 50 cm ou moins.

4. Appareil de mesure d'une concentration en matières particulaires (40PM, 60PM) selon l'une quelconque des revendications 1 à 3, dans lequel l'unité de détection de pression différentielle (42B) comprend un matériau qui présente une résistance à la chaleur de 120 °C ou moins qui est utilisé en tant que matériau de détection de la pression.

5. Appareil de mesure d'une concentration en matières particulaires (40PM, 60PM) selon l'une quelconque des revendications 1 à 3, comprenant une structure de rayonnement de la chaleur disposée dans la conduite de collecte des gaz d'échappement (41A) entre l'extrémité aval du filtre de détection de matières particulaires (42A) et l'unité de détection de pression différentielle (42B).

6. Appareil de mesure d'une concentration en matières particulaires (40PM, 60PM) selon l'une quelconque des revendications 1 à 5, comprenant une unité de mesure de débit (44) disposée dans la conduite de collecte des gaz d'échappement (41A) et configurée de façon à mesurer le débit des gaz d'échappement dans la conduite de collecte des gaz d'échappement (41A).

7. Appareil de mesure d'une concentration en matières particulaires (40PM, 60PM) selon la revendication 6, comprenant :

une soupape de régulation de débit (43) disposée dans la conduite de collecte des gaz d'échappement (41A) et configurée de façon à réguler le débit des gaz d'échappement (Q1) dans la conduite de collecte des gaz d'échappement (41A) ;
une unité de commande configurée de façon à commander la soupape de régulation de débit sur la base du débit des gaz d'échappement (Q1) mesuré par l'unité de mesure de débit (44), de façon à réguler le débit des gaz d'échappement (Q1) dans la conduite de collecte des gaz d'échappement (41A) à une valeur prédéterminée.

8. Appareil de mesure d'une concentration en matières particulaires (40PM, 60PM) selon l'une quelconque des revendications 1 à 7, dans lequel une extrémité aval de la conduite de collecte des gaz d'échappement (41A) est branchée à une unité de pression négative.

9. Appareil de mesure d'une concentration en matières particulaires (40PM, 60PM) selon l'une quelconque des revendications 1 à 6, comprenant une pompe (42P) disposée en aval du filtre de détection de matières particulaires (42A) dans la direction de l'écoulement des gaz d'échappement.

10. Appareil de mesure d'une concentration en matières particulaires (40PM, 60PM) selon l'une quelconque des revendications 1 à 9, dans lequel le filtre de détection de matières particulaires (42A) présente un volume de filtre plus petit que le volume de filtre d'un filtre de capture de matières particulaires (22) disposé dans la conduite d'échappement du moteur diesel (21).

11. Appareil de mesure d'une concentration en matières particulaires (40PM, 60PM) selon l'une quelconque des revendications 1 à 10, dans lequel la conduite de collecte des gaz d'échappement (41A) est connectée à la conduite d'échappement du moteur diesel (21) en aval du filtre de capture de matières particulaires (22).

12. Appareil de mesure d'une concentration en matières particulaires (40PM, 60PM) selon l'une quelconque des revendications 1 à 10, dans lequel la conduite de collecte des gaz d'échappement (41A) est connectée à la conduite d'échappement du moteur diesel (21) en amont du filtre de capture de matières particulaires (22).

# FIG.1

EP 2 236 786 B1

FIG.2

# FIG.3

42A

42b

T

42E

42a

42c

ΔP

Q

GAS OUT

# FIG.4

42A

42c

42E

42a

42b

FIG.5

# FIG.6

# FIG.7

# FIG.8

EP 2 236 786 B1

# FIG.9

40PM

# FIG.10

40PM

42P

42g

42G

42F

42E

42e

# FIG.11

EP 2 236 786 B1

# FIG.12

<u>42A</u>

42a    42c   42b

EXHAUST GAS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1916394 A1

- EP 1914399 A1